**Europäisches Patentamt**

**European Patent Office**

**Office européen des brevets**

(19)

(11) Veröffentlichungsnummer: **0 292 054**
**A2**

(12) # EUROPÄISCHE PATENTANMELDUNG

(21) Anmeldenummer: **88200940.0**

(22) Anmeldetag: **11.05.88**

(51) Int. Cl.⁴: **H04N 9/79**

(30) Priorität: **18.05.87 DE 3716635**

(43) Veröffentlichungstag der Anmeldung:
**23.11.88 Patentblatt 88/47**

(84) Benannte Vertragsstaaten:
**AT DE FR GB**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB AT**

(72) Erfinder: **Geppert, Rudolf**
**Ordulfstrasse 17**
**D-2000 Hamburg 61(DE)**
Erfinder: **Johanndeiter, Martin**
**Schönweg 2**
**D-2000 Hamburg 61(DE)**
Erfinder: **Pech, Eckart**
**Am Wolkenbarg 28**
**D-2071 Ammersbek(DE)**
Erfinder: **Ruprecht, Jürgen**
**Hamburger Kamp 4b**
**D-2000 Oststeinbek(DE)**

(74) Vertreter: **Peters, Carl Heinrich, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung zum wahlweisen Einspeisen eines Fernsehsignales.**

(57) In einer Schaltungsanordnung, insbesondere in einem Fernsehgerät oder Videorecorder, zum wahlweisen Einspeisen eines aus wenigstens einem Leuchtdichte- und einem Farbsignal zusammengesetzten Fernsehsignales oder des Farbsignales getrennt vom Leuchtdichtesignal wird das Einspeisen von Fernsehsignalen verschiedener Formate auf einfache und verzerrungsarme Weise durch eine Multiplexvorrichtung (1) erreicht, die in einer ersten Betriebsart eine dabei das Fernsehsignal führende Fernsehsignalleitung (3) mit einer Leuchtdichtesignalsenke (5) und einer Farbsignalsenke (4) und in einer zweiten Betriebsart die dabei das Leuchtdichtesignal führende Fernsehsignalleitung (3) mit der Leuchtdichtesignalsenke (5) und eine das Farbsignal führende Farbsignalleitung (2) mit der Farbsignalsenke (4)verbindet.

Fig.1

## Schaltungsanordnung zum wahlweisen Einspeisen eines Fernsehsignals

Die Erfindung bezieht sich auf eine Schaltungsanordnung, insbesondere in einem Fernsehgerät oder Videorecorder, zum wahlweisen Einspeisen eines aus wenigstens einem Leuchtdichte- und einem Farbsignal zusammengesetzten Fernsehsignals oder des Farbsignals getrennt vom Leuchtdichtesignal.

Aus der Zeitschrift "Funkschau", Jahrgang 1987, Heft 7, Seite 14, ist ein "SVHS" genanntes Aufzeichnungsformat für Videosignale in einem Videorecorder bekannt, das eine Weiterentwicklung des "VHS"-Standards bei Videorecordern darstellt. Videorecorder, die zur Aufzeichnung des "SVHS"-Signals eingerichtet sind, lassen danach neben der bisher üblichen Einspeisung des Videosignals auch eine getrennte Einspeisung des Leuchtdichte- und des Farbsignals zu. Diese getrennte Einspeisung soll Interferenzen zwischen Leuchtdichte- und Farbsignal vermeiden. Videorecorder nach dem "SVHS"-Aufzeichnungsformat sollen beide Signale auch bei der Wiedergabe getrennt zur Verfügung stellen.

Andererseits sind Schaltungsanordnungen bekannt, die ein Fernsehsignal beispielsweise für die Wiedergabe in einer Bildwiedergabeanordnung aufbereiten. Diese Schaltungsanordnungen stellen Signalsenken für im Fernsehsignal enthaltene Leuchtdichte- und Farbsignale dar, wie sie beispielsweise von einem Videorecorder geliefert werden.

Die Erfindung hat die Aufgabe, eine Schaltungsanordnung zu schaffen, die auf einfache und verzerrungsarme Weise ein wahlweises Einspeisen von Fernsehsignalen verschiedener Formate in die genannten Signalsenken ermöglicht. Insbesondere soll damit das wahlweise Einspeisen von Fernsehsignalen nach dem "VHS"- bzw. dem "SVHS"-Standard ermöglicht werden.

Diese Aufgabe wird bei einer Schaltungsanordnung der gattungsgemäßen Art gelöst durch eine Multiplexvorrichtung, die in einer ersten Betriebsart eine dabei das Fernsehsignal führende Fernsehsignalleitung mit einer Leuchtdichtesignalsenke und einer Farbsignalsenke und in einer zweiten Betriebsart die dabei das Leuchtdichtesignal führende Fernsehsignalleitung mit der Leuchtdichtesignalsenke und eine das Farbsignal führende Farbsignalleitung mit der Farbsignalsenke verbindet. Vorzugsweise wird die Multiplexvorrichtung zur Übertragung eines Fernsehsignals nach dem "VHS"-Standard in ihre erste Betriebsart und zur Übertragung der getrennten Leuchtdichte- und Farbsignale im "SVHS"-Standard in ihre zweite Betriebsart überführt.

Die Erfindung ermöglicht, daß die Signalsenken zur Verarbeitung der Signale nach den unterschiedlichen Standards identisch aufgebaut sein können. Dies vereinfacht deren Aufbau und gewährleistet eine Signalverarbeitung stets gleichbleibender Güte. Die Erfindung ermöglicht außerdem eine Einspeisung der Signale mit unverminderter Qualität. Sie bietet die Möglichkeit, sowohl analoge als auch digitale Fernsehsignale bzw. Leuchtdichte- und Farbsignale zu verarbeiten.

Weitere vorteilhafte Ausgestaltungen der Erfindung sind in den Unteransprüchen aufgeführt.

Die Zeichnung zeigt einige Ausführungsbeispiele der Erfindung, die im Nachfolgenden näher beschrieben werden sollen. Dabei zeigen

Fig. 1 ein Schema einer erfindungsgemäßen Schaltungsanordnung,

Fig. 2 das Blockschaltbild eines ersten Ausführungsbeispieles der Erfindung,

Fig. 3 das Blockschaltbild eines zweiten Ausführungsbeispieles der Erfindung,

Fig. 4 und 5 zwei Abwandlungen des zweiten Ausführungsbeispieles,

Fig. 6 ein detaillierteres Teilschaltbild der Anordnung nach Fig. 5,

Fig. 7 ein Beispiel für Signalverläufe in den Anordnungen nach Fig. 1 und 2,

Fig. 8 ein Beispiel für Signalverläufe in den Anordnungen nach Fig. 3 bis 6.

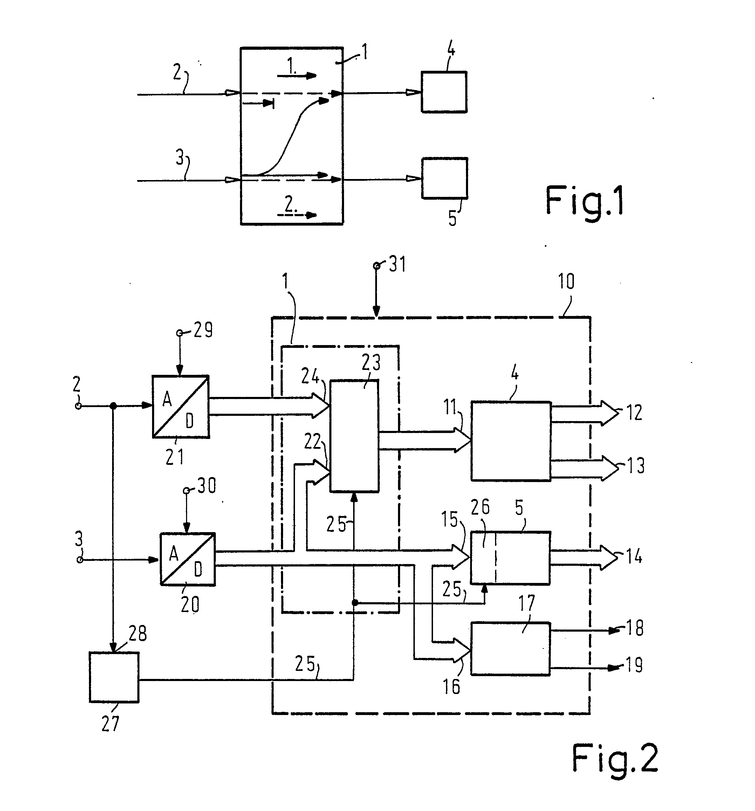

In Fig. 1 ist eine Multiplexvorrichtung 1 - schematisch dargestellt, der in einer ersten Betriebsart über eine Fernsehsignalleitung 3 ein Fernsehsignal zugeführt wird, das aus wenigstens einem Leuchtdichtesignal und einem Farbsignal zusammengesetzt ist. Die Multiplexvorrichtung 1 ist ferner mit einer Farbsignalleitung 2 verbunden, die in der ersten Betriebsart kein Signal führt. Farbsignalleitung 2 und Fernsehsignalleitung 3 sind durch die Multiplexvorrichtung 1 wahlweise mit einer Farbsignalsenke 4 und einer Leuchtdichtesignalsenke 5 verbindbar.

Die durch die Multiplexvorrichtung 1 geschaffenen Verbindungen sind für die erste Betriebsart mit durchgezogenen Pfeilen angedeutet. Danach ist die Farbsignalleitung 2 von allen übrigen Anschlüssen der Multiplexvorrichtung 1 abgetrennt, während die Fernsehsignalleitung 3 sowohl mit der Farbsignalsenke 4 als auch mit der Leuchtdichtesignalsenke 5 verbunden ist. Das Fernsehsignal wird dann beiden Signalsenken zugeführt. Die erste Betriebsart entspricht vorzugsweise der Verarbeitung eines Fernsehsignales nach dem "VHS"-Standard, bei dem im Fernsehsignal sowohl das Leuchtdichte- als auch das Farbsignal frequenzverschachtelt, jedoch auf einer Leitung auftreten.

In einer zweiten Betriebsart bildet die Multiplexvorrichtung zwischen ihren Anschlüssen Verbindungen, wie sie durch die gestrichelt gezeichneten Pfeile in Fig. 1 angedeutet sind. Die Farbsignalleitung 2 ist dann nur mit der Farbsignalsenke 4 und die Fernsehsignalleitung 3 nur mit der Leuchtdichtesignalsenke 5 verbunden. In dieser zweiten Betriebsart wird das Farbsignal des Fernsehsignals getrennt von dessen übrigen Bestandteilen auf der Farbsignalleitung 2 geführt, es tritt daher nicht auf der Fernsehsignalleitung 3 auf. Auf dieser wird das Leuchtdichtesignal und werden gegebenenfalls Synchronsignale übertragen. Die zweite Betriebsart entspricht damit bevorzugt dem "SVHS"-Aufzeichnungsformat.

Durch die Erfindung wird gewährleistet, daß über die Fernsehsignalleitung 3 bzw. die Farbsignalleitung 2 gelieferte Signale beider Aufzeichnungsformate stets korrekt an die entsprechenden Signalsenken geleitet werden. Die Schaltungsanordnung ist einfach aufgebaut und verhindert Qualitätseinbußen in den zu verarbeitenden Signalen.

Fig. 2 zeigt ein Ausführungsbeispiel der Erfindung, das für die Einspeisung des Fernsehsignales mit unterschiedlichem Aufzeichnungsformat in eine Signalverarbeitungsschaltung 10 für digitale Fernsehsignale ausgestaltet ist. Mit Fig. 1 übereinstimmende Elemente dieser Anordnung sind wieder mit denselben Bezugszeichen versehen. Die Signalverarbeitungsschaltung 10 wird beispielsweise durch einen digitalen Multistandarddecoder gebildet. Sie umfaßt die Farb- und die Leuchtdichtesignalsenke 4 und 5. Erstere wird beispielsweise durch eine digitale Farbsignal verarbeitungsschaltung gebildet, die aus dem ihr über einen Eingang 11 zugeführten digitalen Farbsignal in an sich bekannter Weise zwei digitale Farbdifferenzsignale formt und diese an zugehörigen Farbdifferenzsignalausgängen 12, 13 abgibt. Entsprechend wird die Leuchtdichtesignalsenke 5 von einer digitalen Leuchtdichtesignalverarbeitungsschaltung gebildet, die an ihrem Ausgang 14 ein digitales Leuchtdichtesignal abgibt, das von ihr in an sich bekannter Weise aus dem ihr über einen Eingang 15 zugeführten Fernsehsignal geformt wird. Das Signal am Eingang 15 wird außerdem einem Eingang 16 einer Synchronimpulsformstufe 17 zugeführt, die an zwei Synchronimpulsausgängen 18, 19 ein Horizontal- bzw. Vertikalsynchronsignal liefert.

Von der Fernsehsignalleitung 3, auf der in der ersten Betriebsart das Fernsehsignal in analoger Form vorliegt, wird es über einen ersten Analog-Digital-Umsetzer 20 in ein digitales Signal umgesetzt und in dieser Form sowohl den Eingängen 15 und 16 der Leuchtdichtesignalverarbeitungsschaltung 5 bzw. der Synchronimpulsformstufe 17 als auch einem ersten Eingang 22 eines Signalumschalters 23 zugeleitet. Dieser weist ferner einen zweiten Eingang 24 auf, der über einen zweiten Analog-Digital-Umsetzer 21 mit der Farb signalleitung 2 verbunden ist. Dem Signalumschalter 23 wird über eine Leitung 25 weiterhin ein Umschaltsignal zugeführt, durch das er zwischen der ersten und der zweiten Betriebsart umgeschaltet werden kann. In der ersten Betriebsart, bei Fehlen eines Farbsignals auf der Farbsignalleitung 2, verbindet der Signalumschalter 23 seinen ersten Eingang 22 mit dem Eingang 11 der digitalen Farbsignalverarbeitungsschaltung 4, während er in der zweiten Betriebsart seinen zweiten Eingang 24 mit dem Eingang 11 verbindet. Dadurch wird in der ersten Betriebsart das gesamte Fernsehsignal, in der zweiten Betriebsart nur das Farbsignal der Farbsignalsenke 4 zugeleitet. Diese ist vorzugsweise mit einer Filteranordnung zum Abtrennen des Leuchtdichtesignales und anderer Signalanteile versehen, so daß die ihr zugeführten Signale in beiden Betriebsarten in gleicher Weise verarbeitet werden.

Entsprechend weist die digitale Leuchtdichtesignalverarbeitungsschaltung 5 ein Farbsignal-Sperrfilter 26 auf, über das das Fernsehsignal vom Eingang 15 geleitet wird, bevor daraus das digitale Leuchtdichtesignal zur Weiterleitung an den Ausgang 14 geformt wird. Dieses Farbsignal-Sperrfilter 26 wird in der zweiten Betriebsart durch das über die Leitung 25 zugeführte Umschaltsignal wirkungslos geschaltet, so daß es die Verarbeitung des Leuchtdichtesignales nicht mehr beeinflußt. Entsprechend kann die Filteranordnung in der Farbsignalsenke 4 abschaltbar ausgebildet sein.

Das Umschaltsignal auf der Leitung 25 wird bevorzugt durch einen Signaldetektor 27 erzeugt, der mit einem Eingang 28 an die Farbsignalleitung 2 angeschlossen ist. Der Signaldetektor 27 erkennt, ob auf der Farbsignalleitung 2 ein Farbsignal vorliegt. Er kann beispielsweise eine analoge oder digitale Schwellenwertschaltung enthalten. Wird auf der Farbsignalleitung 2 ein Farbsignal detektiert, gibt der Signaldetektor 27 auf der Leitung 25 ein Umschaltsignal mit einem Wert an, der die zweite Betriebsart anzeigt, im anderen Fall nimmt das Umschaltsignal einen Wert an, der die erste Betriebsart anzeigt. Das Umschaltsignal kann auch von einer nicht dargestellten Signalquelle geliefert werden, die mit der Farb- und der Fernsehsignalleitung 2 bzw. 3 verbunden ist, wofür anstelle des Signaldetektors 27 eine entsprechend geführte Leitung 25 benö tigt wird. Die Analog-Digital-Umsetzer 20, 21 und die Signalverarbeitungsschaltung 10 weisen darüber hinaus Anschlüsse 29, 30 bzw. 31 für Taktsignale auf, die in den Analog-Digital-Umsetzern 20, 21 als Abtasttakt zum Umsetzen der analogen Signale in eine Folge digitaler Werte und in der Signalverarbeitungsschaltung 10 zur dazu synchronen Signalverarbeitung herangezogen werden.

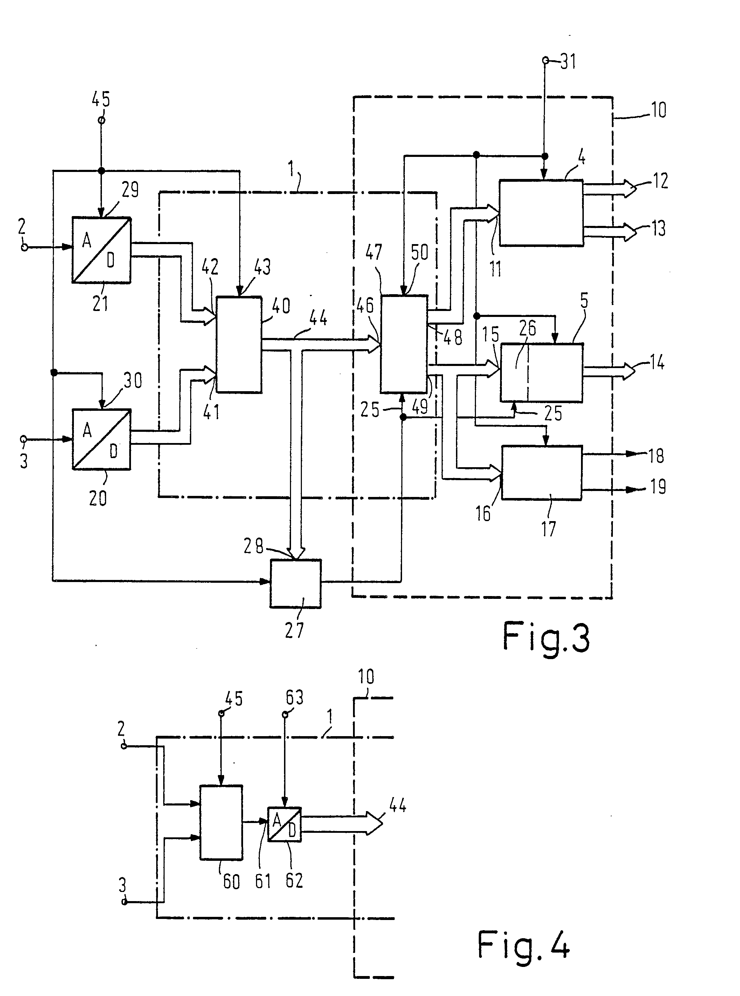

Fig. 3 zeigt das Blockschaltbild eines weiteren Ausführungsbeispieles, in dem mit den vorigen Figuren übereinstimmende Elemente wieder mit identischen Bezugzeichen versehen sind.

In Abwandlung des vorigen Ausführungsbeispieles umfaßt die Multiplexvorrichtung 1 nach Fig. 3 einen Multiplexer 40, dem an einem ersten Eingang 41 das Signal vom ersten Analog-Digital-Umsetzer 20 und an einem zweiten Eingang 42 das Signal vom zweiten Analog-Digital-Umsetzer 21 zugeführt wird und der diese Signale abwechselnd gemäß einem über einen Multiplex-Taktsignaleingang 42 zugeführten Multiplex-Taktsignal einer Sammelleitung 44 zuführt. Im vorliegenden Beispiel wird das Multiplex-Taktsignal unmittelbar aus dem Abtasttakt für die Analog-Digital-Umsetzer 20, 21 gewonnen; entsprechend ist der Multiplex-Taktsignaleingang 43 gemeinsam mit den Anschlüssen 29, 30 der Analog-Digital-Umsetzer 20, 21 für den Abtasttakt an eine Taktsignalzuführung 45 angeschlossen. Das Taktsignal an der Taktsignalzuführung 45 ist bevorzugt ein rechteckförmiges Signal mit einem Tastverhältnis von eins, an dessen positiver Flanke die Analog-Digital-Umsetzer 20, 21 die ihnen über die Farb- bzw. Fernsehsignalleitung 2 bzw. 3 zugeführten, analogen Signale abtasten, um daraus einen digitalen Wert zu bilden. In den Zeitintervallen, in denen das Multiplex-Taktsignal einen hohen Pegel annimmt, verbindet der Multiplexer 40 seinen ersten Eingang 41 und in den übrigen Zeitintervallen seinen zweiten Eingang 42 mit der Sammelleitung 44. Auf dieser treten dann in jedem Abtasttaktintervall nacheinander zwei digitale Werte auf, nämlich in dessen erster Hälfte der digitale Wert des Signals von der Fernsehsignalleitung 3 und in der zweiten Hälfte des Abtasttaktintervalles der digitale Wert des Signals von der Farbsignalleitung 2.

Diese mit doppelter Frequenz des Abtasttaktes auftretende Folge digitaler Werte wird von der Sammelleitung 44 einem Eingang 46 eines Demultiplexers 47 zugeführt, der weiterhin zwei Ausgänge 48, 49 aufweist, die, gesteuert durch das Multiplex-Taktsignal, mit dem Eingang 46 verbindbar sind. Die Art dieser Verbindungen und ihre zeitliche Abfolge hängt außerdem von der Betriebsart ab, in der sich die Schaltungsanordnung gerade befindet. Dem Demultiplexer 47 wird dazu einerseits über einen Taktsignaleingang 50 das Taktsignal vom Anschluß 31 zugeführt, das bevorzugt mit dem Taktsignal an der Taktsignalzuführung 45 übereinstimmt und aus dem das Multiplex-Taktsignal abgeleitet ist, und andererseits wird dem Demultiplexer 47 das Umschaltsignal von der Leitung 25 für die Wahl der Betriebsart zugeleitet.

In der ersten Betriebsart tritt auf der Fernsehsignalleitung 3 ein zusammengesetztes Fernsehsignal auf, während die Farbsignalleitung 2 kein Signal führt. Auf der Sammelleitung 44 wird dann in jedem Abtasttaktintervall in dessen erster Hälfte ein digitaler Wert für den jeweiligen Augenblickswert des Fernsehsignales und in der zweiten Hälfte des Abtasttaktintervalles der Wert Null für das fehlende Signal auf der Farbsignalleitung 2 übertragen. In der ersten Betriebsart wird nun der digitale Wert für das Fernsehsignal vom Demultiplexer 47 aus der Wertefolge auf der Sammelleitung 44 entnommen und gleichzeitig an beiden Ausgängen 48, 49 abgegeben und damit gleichzeitig der Farbsignalsenke 4 und der Leuchtdichtesignalsenke 5 an ihren Eingängen 11 bzw. 15 angeboten. In den Signalsenken wird aus dem Fernsehsignal in an sich bekannter Weise wieder das Farb- das Leuchtdichtesignal gewonnen.

In der zweiten Betriebsart führt die Farbsignalleitung 2 ein Farbsignal und die Fernsehsignalleitung 3 ein Leuchtdichtesignal. Diese werden durch den Multiplexer 40 abwechselnd auf die Sammelleitung 44 geschaltet. Der Demultiplexer 47 verteilt diese Signale in der gleichen Reihenfolge abwechselnd auf seine Ausgänge 48 bzw. 49, so daß am Eingang 11 der Farbsignalsenke 4 nur das Farbsignal und am Eingang 15 der Leuchtdichtesignalsenke 5 nur das Leuchtdichtesignal auftritt. Weitere mit dem Leuchtdichtesignal auf der Fernsehsignalleitung 3 übertragene Signale werden ebenfalls nur der Leuchtdichtesignalsenke sowie im vorliegenden Beispiel auch der Synchronimpulsformstufe 17 zugeführt, deren Eingang 16 ebenfalls mit dem zweiten Ausgang 49 des Demultiplexers 47 verbunden ist.

Im Beispiel nach Fig. 3 ist der Signaldetektor 27 mit seinem Eingang 28 an die Sammelleitung 44 angeschlossen. Ihm wird ferner von der Taktsignalzuführung 45 ein Taktsignal zugeleitet, durch das der Eingang 28 derart gesteuert wird, daß von der Sammelleitung 44 nur die Signale in den Zeitintervallen übernommen werden, in denen die Sammelleitung 44 mit dem zweiten Eingang 42 des Multiplexers 40 verbunden ist. Dadurch ist sichergestellt, daß nur das Signal von der Farbsignalleitung 2 ausgewertet wird.

Die Schaltungsanordnung nach Fig. 3 hat gegenüber derjenigen nach Fig. 2 den Vorteil, daß bei einem Aufbau der Signalverarbeitungsschaltung 10 als integrierte Schal tungsanordnung auf einem Halbleiterplättchen diese nur einen Eingang für ein digitales Signal, nämlich die Sammelleitung 44, aufweist, während sie in der Schaltungsanordnung nach Fig. 2 deren zwei umfaßt. Allerdings ist die Datenrate auf der Sammelleitung 44 gegenüber derjenigen an den Eingängen 22 und 24 des Signalumschalters 23 und damit den Eingängen der Signalverarbeitungsschaltung 10 in Fig. 2 verdoppelt.

Fig. 4 zeigt eine Abwandlung für den Multiplexer 40 aus Fig. 3, der für digitale Signale ausgelegt ist und an dessen Stelle jetzt ein Analog-Multiplexer 60 tritt, der abwechselnd gemäß dem ihm von der Taktsignalzuführung 45 zugeleiteten Multiplex-Taktsignal die Farbsignalleitung 2 oder die Fernsehsignalleitung 3 mit den darauf zugeführten analogen Signalen mit dem Analogeingang 61 eines Analog-Digital-Umsetzers 62 verbindet. Dem Analog-Digital-Umsetzer 62 wird an seinem Taktsignaleingang 63 ein Abtasttakt zugeführt, der entsprechend der Signalfolge am Analogeingang 61 die doppelte Frequenz des Abtasttaktes der Analog-Digital-Umsetzer 20, 21 nach Fig. 3 aufweist. An die Sammelleitung 44 wird dann vom Analog-Digital-Umsetzer 62 die gleiche Signalfolge abgegeben, wie sie auch in der Schaltungsanordnung nach Fig. 3 von der Sammelleitung 44 geführt wird.

Bei der Anordnung nach Fig. 4 wird gegenüber den vorstehend beschriebenen Anordnungen ein Analog-Digital-Umsetzer eingespart. Der verbleibende Analog-Digital-Umsetzer 62 muß jedoch für die doppelte Abtast-Taktfrequenz ausgelegt sein. Außerdem wird ein Analog-Multiplexer 60 benötigt, der bei Verarbeitung der schnellen Datenfolgen, wie sie in einem digitalen Fernsehsignal auftreten, hohe Anforderungen bezüglich seiner Hochfrequenzeigenschaften erfüllen muß.

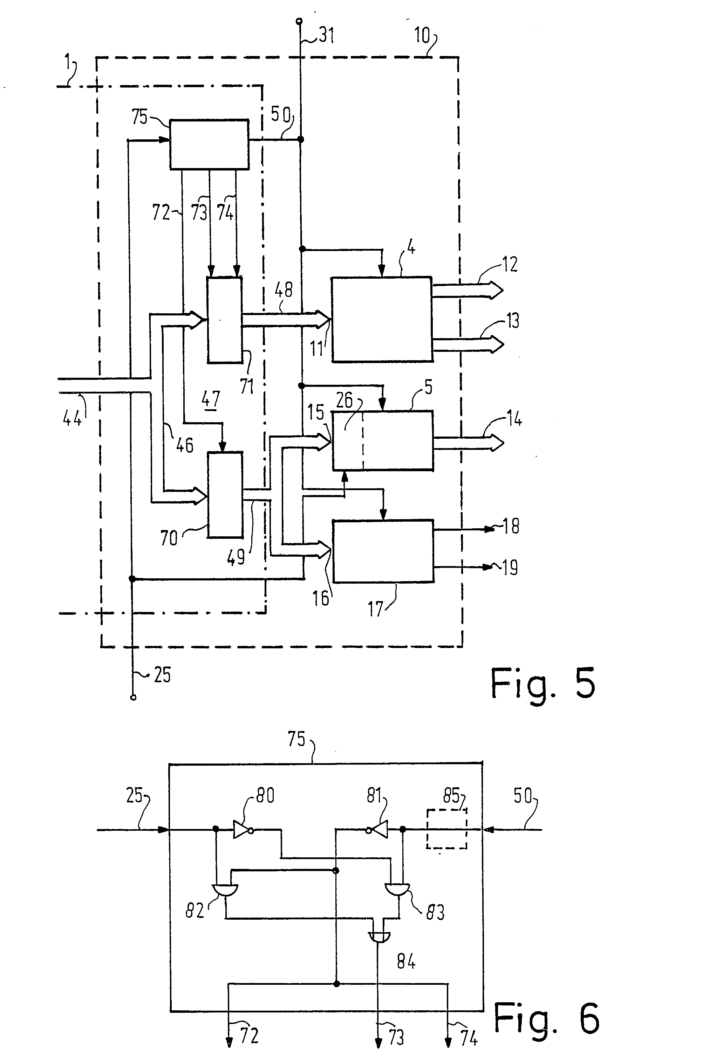

Fig. 5 zeigt eine weitere Abwandlung der Schaltungsanordnung nach Fig. 3, in der mit bereits beschriebenen Anordnungen übereinstimmende Elemente wieder mit denselben Bezugszeichen versehen sind. In Fig. 5 umfaßt der Demultiplexer 47 je einen der Leuchtdichte- und der Farbsignalsenke 5 bzw. 4 zugeordneten Speicher 70 bzw. 71. Diese Speicher 70, 71 bilden mit ihren Eingängen den Eingang 46 des Demultiplexers 47 und mit ihren Ausgängen dessen Ausgänge 48, 49. Ihnen werden über Steuerleitungen 72, 73, 74 Speicher-Taktsignale zugeführt. Diese werden in einer Steuerstufe 75 aus dem über den Taktsignaleingang 50 zugeführten Takt, der auch für die Verarbeitung der digitalen Signale in der Leuchtdichte- und der Farbsignalsenke 5 bzw. 4 sowie der Synchronimpulsformstufe 17 herangezogen wird und aus dem Multiplex-Taktsignal abgeleitet bzw. mit ihm starr verknüpft ist, und dem Umschaltsignal von der Leitung 25 erzeugt. Dabei sind die Speicher-Taktsignale auf den Steuerleitungen 72 und 74 in beiden Betriebsarten gleich und stets synchron zueinander und stellen ein erstes Speicher-Taktsignal dar. Das Speicher-Taktsignal von der Steuerleitung 72 wird dem Leuchtdichtesignalsenke 5 zugeordneten Speicher 70 zugeleitet. Beispielsweise beim Auftreten einer positiven Flanke in diesem Speicher-Taktsignal wird der augenblickliche digitale Wert am Eingang 46 in den Speicher 70 geladen und steht dann unmittelbar am zweiten Ausgang 49 des Demultiplexers zur Weiterleitung an die Eingänge 15 bzw. 16 zur Verfügung, bis der nächste Wert in den Speicher 70 geladen wird.

Das Speicher-Taktsignal auf der Steuerleitung 74 wird dagegen dem der Farbsignalsenke 4 zugeordneten Speicher 71 zugeführt und schaltet beispielsweise beim Auftreten einer positiven Flanke den im Speicher 71 gespeicherten digitalen Wert über den ersten Ausgang 48 des Demultiplexers 47 auf den Eingang 11 der Farbsignalsenke 4 durch. Es wird so gewährleistet, daß den Eingängen 11, 15 und 16 die Signale synchron zugeleitet und sie damit auch synchron weiterverarbeitet werden.

Das Speicher-Taktsignal auf der Steuerleitung 73 wird dem der Farbsignalsenke 4 zugeordneten Speicher 71 als Einlesetakt zugeführt. Dieser Einlesetakt ist in der ersten Betriebsart synchron zu den Speicher-Taktsignalen auf den Steuerleitungen 72 und 74 und somit gleich dem ersten Speicher-Taktsignal. Dann wird das über die Sammelleitung 74 zugeführte Fernsehsignal gleichzeitig in die Speicher 70 und 71 geladen und aus diesen gleichzeitig an die Leuchtdichte- und Farbsignalsenke 5 bzw. 4 sowie die Synchronimpulsformstufe 17 weitergeleitet. In der zweiten Betriebsart ist dagegen der Einlesetakt von der Steuerleitung 73 gegenüber den Speicher-Taktsignalen auf den Steuerleitungen 72 und 74 um eine halbe Taktperiode verschoben und bildet ein zweites Speicher-Taktsignal. Dadurch wird erreicht, daß aus dem nun über die Sammelleitung 44 gelieferten, verschachtelten Signal aus abwechselnd einem digitalen Wert für das Farbsignal und einem digitalen Wert, der das Leuchtdichtesignal beinhaltet, innerhalb einer Taktperiode die Werte für das Farbsignal dem Speicher 71 und die Werte für das Leuchtdichtesignal nur dem Speicher 70 zugeführt werden. Durch das Speicher-Taktsignal auf der Steuerleitung 74 wird dann eine zeitliche Synchronisation der nacheinander übertragenen Werte erreicht.

Fig. 6 zeigt ein Ausführungsbeispiel für eine Steuerstufe 75. Diese umfaßt zwei Inverter 80, 81, zwei Und-Gatter 82, 83 sowie ein Oder-Gatter 84, die miteinander und mit der Leitung 25, dem Taktsignaleingang 50 und der Steuerleitung 74 derart verbunden sind, daß der Einlese takt auf der Steuerleitung 73 aus einer Exklusiv-Oder-Verknüpfung des Umschaltsignals und des Taktsignals vom Taktsignaleingang 50 gebildet wird. Auf diese Weise wird der Einlesetakt auf der Steuerleitung 73 aus dem Taktsignal abgeleitet und die Art dieser Ableitung durch das Umschaltsignal und damit in Abhängigkeit von der Betriebsart bestimmt. Die Speicher-Taktsignale auf den Steuerleitungen 72 und 74 werden dagegen unabhängig von der Betriebsart vom Ausgang des Inverters 81 abgegriffen, bilden also im wesentlichen das Inverse des Taktsignals vom Taktsignaleingang 50.

Für eine korrekte Abfolge der Taktsignale für Speicher, Multiplexer und für die weitere Verarbeitung der digitalen Signale in der Signalverarbeitungsschaltung 10 kann eine Zeitverzögerung der Speicher-Taktsignale gegenüber dem Multiplex-Taktsignal oder dem Abtasttakt erforderlich sein. Diese wird beispielsweise durch ein Zeitverzögerungsglied 85 erhalten, das wahlweise in den Taktsignaleingang 50 eingefügt ist.

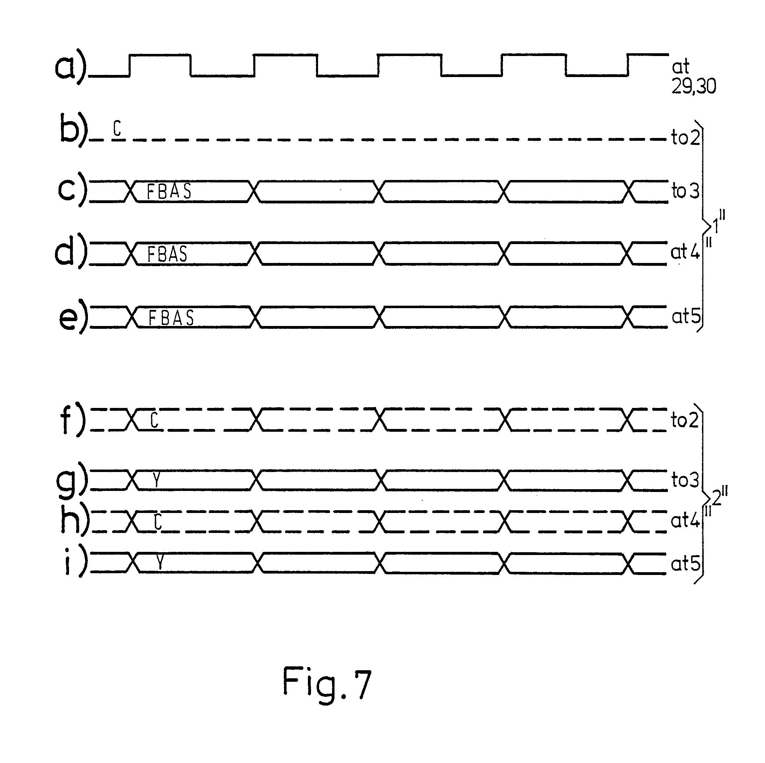

Fig. 7 zeigt als Beispiel die Zeitverläufe einiger Signale, wie sie in Anordnungen gemäß Fig. 1 und 2 auftreten können. Der Einfachheit halber wurde dabei nur ein Beispiel mit digitalen Fernsehsignalen gewählt.

Fig. 7a) zeigt ein rechteckförmiges Signal, das als Abtasttakt bei der Umwandlung eines analogen Fernsehsignales in ein digitales Signal einsetzbar ist und für die übrigen Kurvenverläufe der Fig. 7 als Zeitmaßstab dient. Bei jeder ansteigenden Flanke des Taktsignales in Fig. 7a) wird aus dem Augenblickswert des analogen Signales ein digitaler Wert gebildet.

Fig. 7b) - e) stellen Signalverläufe für die erste Betriebsart dar. Die Farbsignalleitung 2 führt dann kein Farbsignal; dies ist durch die Kurve nach Fig. 7b) angedeutet. Auf der Fernsehsignalleitung 3 wird ein zusammengesetztes Farbfernsehsignal, auch als FBAS-Signal bezeichnet, übertragen. Dieses ist schematisch in Fig. 7c) dargestellt. Durch die Multiplexvorrichtung 1 wird nun dieses FBAS-Signal synchron auf die Farb- und die Leuchtdichtesignalsenke 4 bzw. 5 geleitet, dort liegen dann die in Fig. 7d) bzw. e) skizzierten Signalverläufe an. Sie sind mit dem Signal nach Fig. 7c) identisch.

In der zweiten Betriebsart tritt in der Farbsignalleitung 2 ein Farbsignal - mit C bezeichnet - und auf der Fernsehsignalleitung 3 ein das Leuchtdichtesignal umfassendes Signal auf - mit Y bezeichnet. Diese Signale sind gemäß einem gemeinsamen Abtasttakt - vgl. Fig. 2, Analog-Digital-Umsetzer 20, 21 - synchron zueinander, wie in Fig. 7f) und g) dargestellt. Die Multiplexvorrichtung 1 leitet nun das Farbsignal der Farbsignalsenke 4 und das Leuchtdichtesignal der Leuchtdichtesignalsenke 5 zu, so daß an diesen die in Fig. 7h) bzw. i) dargestellten Signalverläufe auftreten.

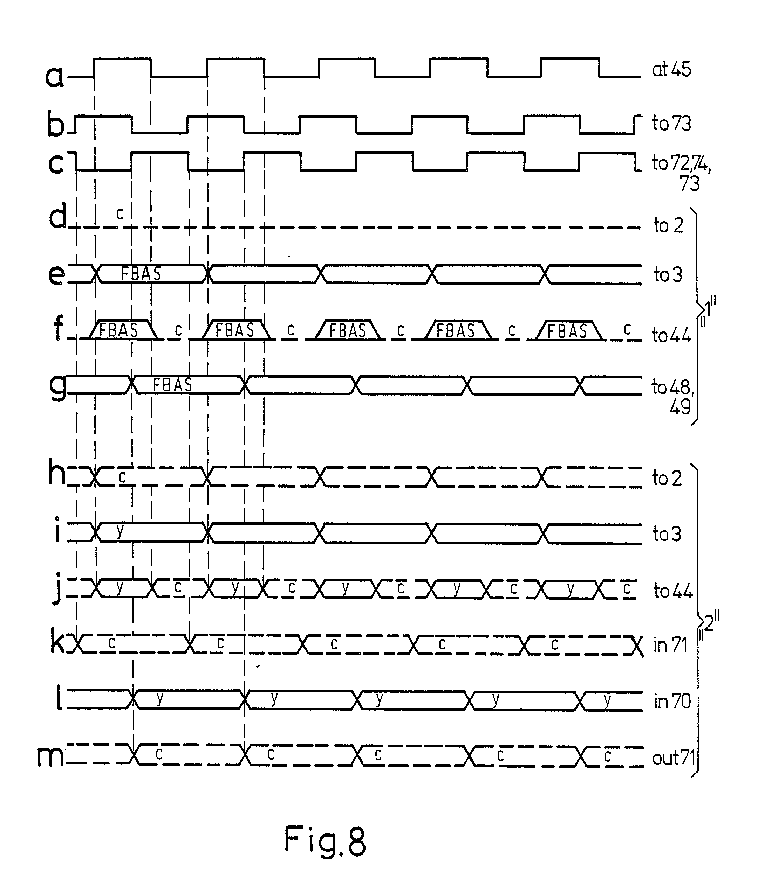

Fig. 8 zeigt einige Signalverläufe für die Schaltungsanordnungen gemäß Fig. 3 bis 6. Der Einfachheit halber wurde wieder nur ein Beispiel mit digitalen Fernsehsignalen dargestellt bzw. für an sich in analoger Form vorliegende Signale eine digitale Darstellungsweise gewählt. In Fig. 8a) ist das Multiplex-Taktsignal an der Taktsignalzuführung 45 dargestellt. Fig. 8b) und c) zeigen die daraus durch Zeitverzögerung und Invertierung abgeleiteten Speicher-Taktsignale, wobei das Signal nach Fig. 8c) als erstes Speicher-Taktsignal in beiden Betriebsarten an den Steuerleitungen 72 und 74 anliegt sowie in der ersten Betriebsart an der Steuerleitung 73, während das Signal nach Fig. 8b) als zweites Speicher-Taktsignal in der zweiten Betriebsart den Einlesetakt auf der Steuerleitung 73 bildet. Zu den Zeitpunkten der ansteigenden Flanken der Speicher-Taktsignale nach Fig. 8b) und c) werden jeweils die digitalen Signale in die Speicher 70, 71 ein-bzw. aus ihnen ausgelesen. Wenn das Multiplex-Taktsignal nach Fig. 8a) einen hohen Pegel annimmt, verbindet der Multiplexer 40 die Fernsehsignalleitung 3 mit der Sammelleitung 44, ansonsten ist die Farbsignalleitung 2 mit dieser verbunden.

In Fig. 8d) - g) sind Signalverläufe für die erste Betriebsart dargestellt. Ein Farbsignal ist dann nicht vorhanden, vgl. Fig. 8d), und auf der Fernsehsignalleitung 3 liegt das FBAS-Signal gemäß Fig. 8e). Auf der Sammelleitung 44 wird durch das Multiplex-Taktsignal ein zeitlich verschachteltes Signal gemäß Fig. 8f) erzeugt, das in der ersten Hälfte jeder Abtasttakt-Periode den Wert des FBAS-Signals und in der zweiten Hälfte der Abtasttakt-Periode den Wert Null entsprechend dem nicht vorhandenen Farbsignal auf der Farbsignalleitung 2 annimmt. Gemäß dem Signal nach Fig. 8c) wird das Signal auf der Sammelleitung 44 vom Demultiplexer 47 übernommen und an seinen Ausgängen 48, 49 in der in Fig. 8g) dargestellten Form wiedergegeben.

Fig. 8h) - m) zeigen die entsprechenden Signalverläufe in der zweiten Betriebsart. Jetzt treten auf der Farbsignalleitung 2 das Farbsignal C gemäß Fig. 8h) und auf der Fernsehsignalleitung 3 das Leuchtdichtesignal Y gemäß Fig. 8i) auf. Sie werden wieder gemäß dem Multiplex-Taktsignal nach Fig. 8a) abwechselnd auf die Sammelleitung 44 geschaltet, so daß sich der Signalverlauf gemäß Fig. 8j) ergibt. Vom Speicher 71 des Demultiplexers 47 wird dieses verschachtelte Signal gemäß dem Einlesetakt nach Fig. 8b) an dessen ansteigenden Flanken übernommen, so daß im Speicher 71 ein Signal mit dem Verlauf gemäß Fig. 8k) auftritt. Entsprechend wird mit dem Speichertaktsignal über die Steuerleitung 72 von der Sammelleitung 44 ein Signal in den Speicher 70 eingelesen, in dem dann der Signalverlauf gemäß Fig. 8l) auftritt. Durch die um eine halbe Abtasttakt-Periode verschobenen Speicher-Taktsignale wird somit erreicht, daß im Speicher 70 nur das Leuchtdichtesignal und im Speicher 71 nur das Farbsignal gespeichert werden. Durch das Speichertaktsignal auf der Steuerleitung 74 wird dann das Farbsignal vom Speicher 71 zur Farbsignalsenke 4 synchron mit dem Speicher-Taktsignal für den Speicher 70 ausgelesen, so daß am Ausgang 48 des Demultiplexers 47 das in Fig. 8m) dargestellte Signal erscheint.

Ohne Abänderung der Funktion des Multiplexers 40 in den beiden Betriebsarten wird somit im Demultiplexer 47 stets eine korrekte Signalverteilung und -trennung zu den einzelnen Signalsenken hin erzielt.

**Ansprüche**

1. Schaltungsanordnung, insbesondere in einem Fernsehgerät oder Videorecorder, zum wahlweisen Einspeisen eines aus wenigstens einem Leuchtdichte- und einem Farbsignal zusammengesetzten Fernsehsignals oder des Farbsignals getrennt vom Leuchtdichtesignal,
gekennzeichnet durch eine Multiplexvorrichtung (1), die in einer ersten Betriebsart eine dabei das Fernsehsignal führende Fernsehsignalleitung (3) mit einer Leuchtdichtesignalsenke (5) und einer Farbsignalsenke (4) und in einer zweiten Betriebsart die dabei das Leuchtdichtesignal führende Fernsehsignalleitung (3) mit der Leuchtdichtesignalsenke (5) und eine das Farbsignal führende Farbsignalleitung (2) mit der Farbsignalsenke (4) verbindet.

2. Schaltungsanordnung nach Anspruch 1,
dadurch gekennzeichnet, daß Fernseh-, Leuchtdichte- und Farbsignal digitale Signale sind.

3. Schaltungsanordnung nach Anspruch 1 oder 2,
dadurch gekennzeichnet, daß die Multiplexvorrichtung (1) einen Signalumschalter (23) umfaßt, der in der ersten Betriebsart die Fernsehsignalleitung (3) und in der zweiten Betriebsart die Farbsignalleitung (2) mit der Farbsignalsenke (4) verbindet, und daß die Fernsehsignalleitung (3) fest mit der Leuchtdichtesignalsenke (5) verbunden ist.

4. Schaltungsanordnung nach Anspruch 1 oder 2,
dadurch gekennzeichnet, daß die Multiplexvorrichtung (1) einen Multiplexer (40), der die Fernsehsignal- (3) und die Farbsignalleitung (2) abwechselnd gemäß einem Multiplex-Taktsignal mit einer Sammelleitung (44) verbindet, und einen Demultiplexer (47) umfaßt, der gemäß dem Multiplex-Taktsignal in der ersten Betriebsart das Fernsehsignal von der Sammelleitung (44) gleichzeitig und in der zweiten Betriebsart die Signale von der Sammelleitung (44) abwechselnd der Leuchtdichte- (5) bzw. der Farbsignalsenke (4) zuführt.

5. Schaltungsanordnung nach Anspruch 4,
dadurch gekennzeichnet, daß das Fernseh- und das Farbsignal vor dem Zuführen zum Multiplexer (40) in digitale Signale umgesetzt werden.

6. Schaltungsanordnung nach Anspruch 4,
dadurch gekennzeichnet, daß das Fernseh- und das Farbsignal dem Multiplexer (60) als analoge Signale zugeführt werden und das Ausgangssignal des Multiplexers (60) auf der Sammelleitung (44) in ein digitales Signal umgesetzt wird.

7. Schaltungsanordnung nach Anspruch 4, 5 oder 6,
dadurch gekennzeichnet, daß der Demultiplexer (47) je einen der Leuchtdichte- (5) und der Farbsignalsenke (4) zugeordneten Speicher (70 bzw. 71) enthält, in die die Signale von der Sammelleitung (44) mit aus dem Multiplex-Taktsignal abgeleiteten Speicher-Taktsignalen eingelesen werden.

8. Schaltungsanordnung nach Anspruch 7,
dadurch gekennzeichnet, daß die Signale von der Sammelleitung (44) in der ersten Betriebsart mit einem gemeinsamen ersten Speicher-Taktsignal (auf 72, 73) in die Speicher (70, 71) und in der zweiten Betriebsart in den der Leuchtdichtesignalsenke (5) zugeordneten Speicher (70) mit dem ersten Speicher-Taktsignal (auf 72) und in den der Farbsignalsenke (4) zugeordneten Speicher (71) mit einem zum ersten Speicher-Taktsignal (auf 72) inversen zweiten Speicher-Taktsignal (auf 73) eingelesen werden.

9. Schaltunganordnung nach Anspruch 4, 5, 6, 7 oder 8,
dadurch gekennzeichnet, daß das Multiplex-Taktsignal aus einem Abtast-Taktsignal des digitalen Fernseh- bzw. Leuchtdichte- und Farbsignals abgeleitet ist.

10. Schaltungsanordnung nach einem oder mehreren der vorhergehenden Ansprüche,
gekennzeichnet durch ein Farbsignal-Sperrfilter (26), über das in der ersten Betriebsart das Fernsehsignal der Leuchtdichtesignalsenke (5) zugeführt wird und das in der zweiten Betriebsart wirkungslos schaltbar ist.

11. Schaltungsanordnung nach einem oder mehreren der vorhergehenden Ansprüche,
gekennzeichnet durch eine Filteranordnung, die zum Abtrennen des Leuchtdichtesignales und anderer Signalanteile vom Farbsignal in der Farbsignalsenke (4) dient und in der zweiten Betriebsart wirkungslos schaltbar ist.

12. Schaltungsanordnung nach einem oder mehreren der vorhergehenden Ansprüche,
gekennzeichnet durch einen mit der Farbsignalleitung (2) oder der Sammelleitung (44) verbundenen Signaldetektor (27), der das Vorhandensein eines getrennten Farbsignales detektiert und daraus ein Umschaltsignal (auf 25) erzeugt zum Umschalten der Multiplexvorrichtung (1) und/oder des Farbsignal-Sperrfilters (26) in die zutreffende Betriebsart.

Fig.1

Fig.2

Fig.3

Fig.4

0 292 054

2-Ⅴ-PHD 87-097

Fig. 5

Fig. 6

Fig.7

Fig.8